# EUROPEAN PATENT APPLICATION

(11) **EP 4 443 351 A1**
(43) Date of publication of application: **09.10.2024**
(21) Application number: 21966370.5
(22) Date of filing: 01.12.2021
(51) Int. Cl.: G06Q 10/04, B65G 1/137, G06Q 10/08

(54) **INFORMATION PROCESSING DEVICE, PLANNING METHOD, AND PLANNING PROGRAM**

(71) Applicant: FUJITSU LIMITED, Kawasaki-shi, Kanagawa 211-8588 (JP)
(72) Inventor: MARUYAMA, Kazunori, Kawasaki-shi, Kanagawa 211-8588 (JP); YAMAZAKI, Takashi, Kawasaki-shi, Kanagawa 211-8588 (JP)
(74) Representative: Hoffmann Eitle
(86) International application number: PCT/JP2021/044067
(87) International publication number: WO 2023/100286

(57) **Abstract**

A planning program causes a computer to execute processing including: acquiring a first sequence that indicates an arrangement sequence of a plurality of designation units each of which designates work contents; acquiring a constraint condition regarding combinations of the plurality of designation units; performing first search processing of sequentially searching for one or more of the combinations of the designation units so as to satisfy the constraint condition in accordance with the first sequence; performing first creation processing of creating a second sequence by placing, at a top in the first sequence, first unallocated designation units that are the designation units not allocated to any of the combinations as a result of the first search process; and performing second search processing of sequentially searching for one or more of the combinations of the designation units so as to satisfy the constraint condition in accordance with the second sequence.

## Description

### FIELD

The present application relates to an information processing device, a planning method, and a planning program.

### BACKGROUND

A technique for improving efficiency of picking work in a warehouse or the like is disclosed (see, for example, Patent Documents 1 and 2).

### SUMMARY

### TECHNICAL PROBLEM

When sequentially searching for one or more combinations of designation units that designate work contents from an initial sequence of a plurality of designation units so as to satisfy a predetermined constraint condition, an unallocated designation unit that is not allocated to any combination remains in some cases.

In one aspect, an object of the present application is to provide an information processing device, a planning method, and a planning program capable of reducing the number of unallocated designation units.

### SOLUTION TO PROBLEM

In one mode, a planning program causes a computer to execute processing including: acquiring a first sequence that indicates an arrangement sequence of a plurality of designation units each of which designates work contents; acquiring a constraint condition regarding combinations of the plurality of designation units; performing first search processing of sequentially searching for one or more of the combinations of the designation units so as to satisfy the constraint condition in accordance with the first sequence; performing first creation processing of creating a second sequence by placing, at a top in the first sequence, first unallocated designation units that are the designation units not allocated to any of the combinations as a result of the first search processing; and performing second search processing of sequentially searching for one or more of the combinations of the designation units so as to satisfy the constraint condition in accordance with the second sequence.

### ADVANTAGEOUS EFFECTS OF INVENTION

The number of unallocated designation units may be reduced.

### BRIEF DESCRIPTION OF DRAWINGS

FIG. 1A is a diagram illustrating each order, FIG. 1B is a diagram illustrating moving directions of a moving body in a warehouse, and FIG. 1C is a diagram illustrating positions of articles included in an order a1 and positions of articles included in an order a2.
FIG. 2 is a diagram illustrating a result of sequentially allocating each order to one of groups so as to satisfy a constraint condition.
FIG. 3A is a block diagram illustrating an overall configuration of an information processing device, and FIG. 3B is a block diagram illustrating a hardware configuration of the information processing device.
FIG. 4A is a diagram illustrating a layout, FIG. 4B is a diagram illustrating a shelf number table, and FIG. 4C is a diagram illustrating a moving distance table.
FIG. 5 is a diagram illustrating an order table.
FIG. 6 is a flowchart representing an exemplary operation of the information processing device.
FIG. 7 is a diagram illustrating an initial order sequence.
FIG. 8 is a diagram illustrating a search procedure of a search unit in a case where a total moving distance is assigned as an index.
FIGs. 9A to 9C are diagrams illustrating a procedure of steps S2 to S4.
FIG. 10 is a flowchart representing an exemplary operation in a case where an upper limit is set for the number of repetitions of steps S2 to S4.
FIGs. 11A to 11C are diagrams illustrating creation of the initial order sequence.
FIG. 12 is a block diagram in a case where a result output by an output unit is output to an automatic traveling machine.

### DESCRIPTION OF EMBODIMENTS

Prior to the description of the embodiments, a picking work will be described as an example of the work.

In picking work in a warehouse, a method is often adopted in which a moving body such as a worker or an automatic traveling machine moves in the warehouse and puts a picked article into a receptacle such as a cart or a container. Inefficient picking work incurs cost, and thus a variety of improvements in efficiency have been promoted.

In a case where the warehouse has a large area and articles to be picked are distributed in the warehouse, multi-picking (multi-picking) in which a plurality of orders are collectively handled in one turn (meaning going around in the warehouse from a specified point and returning to the specified point) is more efficient than handling one order in one turn. In multi-picking, a combination of orders is a point that affects the efficiency of picking.

Here, the order will be described. The order is a designation unit that designates picking of one or more articles. In a case where one article is included in one order, the moving body leaves the specified point, puts the one article into the receptacle in one turn, and returns to the specified point. In a case where two or more articles are included in one order, the moving body leaves the specified point, puts the two or more articles into the receptacle in one turn, and returns to the specified point. In a case where these two or more articles are placed in a distributed manner in the warehouse, the moving body will move to the placement position of each article in sequence.

The index that raises the efficiency of multi-picking is divided into two of a linear index and a non-linear index. The linear index is an index in which the index of each order does not vary depending on other orders to be combined. Examples of the linear index include a summed product weight per turn, an absolute difference from an average value of the summed product weight, and the like. The non-linear index is an index in which the index of each order can vary depending on other orders to be combined. Examples of the non-linear index include a total moving distance, a product duplication ratio, and the like.

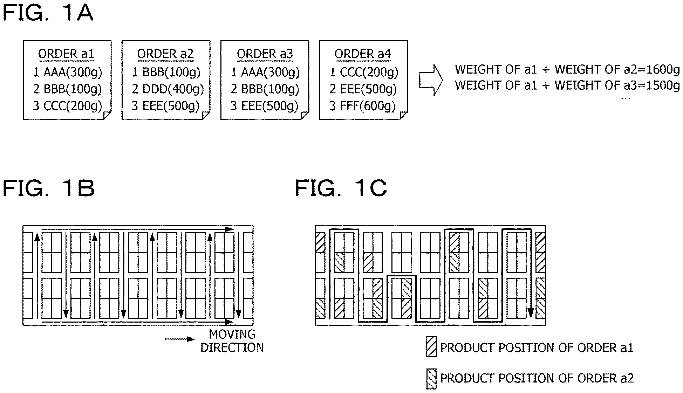

FIG. 1(a) is a diagram illustrating each order. FIG. 1(a) illustrates four types of orders a1 to a4 as an example. For example, in the order a1, picking of articles such as an article AAA, an article BBB, and an article CCC is designated. The weight of each article is also given in the order. The number of articles of each order, the weight of the article, and the like do not vary regardless of other orders to be combined. Therefore, the number of articles, the article weight, and the like are examples of the linear index.

FIG. 1(b) is a diagram illustrating moving directions of a moving body in a warehouse. For example, as illustrated in FIG. 1(b), moving directions of the moving body in the warehouse are defined. FIG. 1(c) is a diagram illustrating positions of articles included in the order a1 and positions of articles included in the order a2. In the example in FIG. 1(c), the articles of the order a2 are placed in the middle of a movement route involved to pick the articles of the order a1. In this case, the articles of the order a2 will also be picked in the middle of the movement route involved for the order a1. Therefore, the moving distance involved to complete picking of all the articles of the order a1 and all the articles of the order a2 is not the sum of the moving distance involved to pick only each article of the order a1 and the moving distance involved to pick only each article of the order a2. In addition, also in a case where articles to be picked duplicate between two orders, the duplicate articles can be picked together. Also in this case, the moving distance involved to complete picking of all the articles of the order a1 and all the articles of the order a2 is not the sum of the moving distance involved to pick only each article of the order a1 and the moving distance involved to pick only each article of the order a2. In this manner, the moving distance of each order (the moving distance involved to pick only each article of the order), the article duplication ratio between orders, and the like can change depending on other orders to be combined. Therefore, the moving distance, the article duplication ratio, and the like are examples of the non-linear index.

Note that if the moving distance can be made as short as possible, the picking efficiency is increased. In addition, when the article duplication ratio is increased, the moving distance can be shortened. Depending on how the orders are combined, the moving distance can be shortened, and the article duplication ratio can be increased.

Thus, it is conceivable to combine a plurality of orders so as to minimize the moving distance. However, when the number of orders is large, the number of combinations becomes enormous, and it is difficult to calculate an optimal combination of orders in a realistic time.

Thus, it is conceivable to sequentially allocate a plurality of orders to each combination (group) such that the index of each combination of orders satisfies a constraint condition. For example, it is conceivable to sequentially allocate a plurality of orders to each group such that the article duplication ratio becomes larger and the moving distance becomes shorter. However, in this case, there is a likelihood that an order that does not satisfy the constraint condition may remain unallocated to any combination.

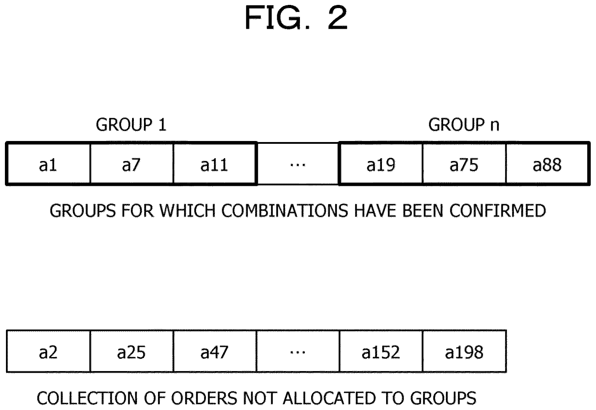

FIG. 2 is a diagram illustrating a result of sequentially allocating each order to one of groups (combination units for orders) so as to satisfy constraint conditions 1 and 2. For example, the constraint condition 1 defines that one group has to regularly include three orders and a fraction is assigned to one group. The constraint condition 2 defines that the summed weight of all the articles of each group has to be equal to or less than a predetermined weight. The diagram on the upper side in FIG. 2 illustrates a case where a search for combinations has been done for groups 1 to n. The diagram on the lower side in FIG. 2 illustrates orders for which a combination of three orders satisfying the constraint condition 2 has not been found. In this manner, there can be orders that remain unallocated to any group.

In the following embodiments, an information processing device, a planning method, and a planning program capable of reducing the number of unallocated orders when searching for a combination of orders under a constraint condition will be described.

### [First Embodiment]

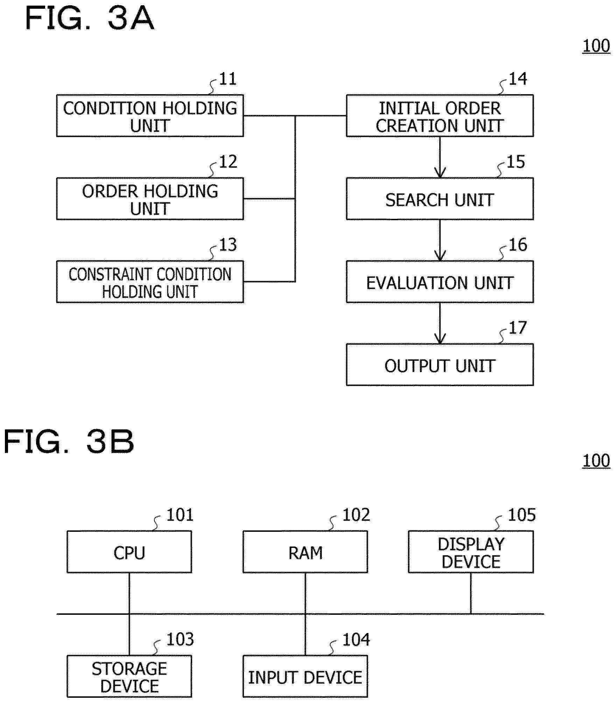

FIG. 3(a) is a block diagram illustrating an overall configuration of an information processing device 100. As illustrated in FIG. 3(a), the information processing device 100 includes a condition holding unit 11, an order holding unit 12, a constraint condition holding unit 13, an initial order creation unit 14, a search unit 15, an evaluation unit 16, an output unit 17, and the like.

FIG. 3(b) is a block diagram illustrating a hardware configuration of the information processing device 100. As illustrated in FIG. 3(b), the information processing device 100 includes a central processing unit (CPU) 101, a random access memory (RAM) 102, a storage device 103, an input device 104, a display device 105, and the like.

The central processing unit (CPU) 101 is a central processing device. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. For example, a read only memory (ROM), a solid state drive (SSD) such as a flash memory, a hard disk to be driven by a hard disk drive, or the like can be used as the storage device 103. The storage device 103 stores a planning program for work plans. The input device 104 is an input device such as a keyboard or a mouse. The display device 105 is a display device such as a liquid crystal display (LCD). The condition holding unit 11, the order holding unit 12, the constraint condition holding unit 13, the initial order creation unit 14, the search unit 15, the evaluation unit 16, and the output unit 17 are implemented by the CPU 101 executing the planning program. Note that hardware such as a dedicated circuit may be used as the condition holding unit 11, the order holding unit 12, the constraint condition holding unit 13, the initial order creation unit 14, the search unit 15, the evaluation unit 16, and the output unit 17.

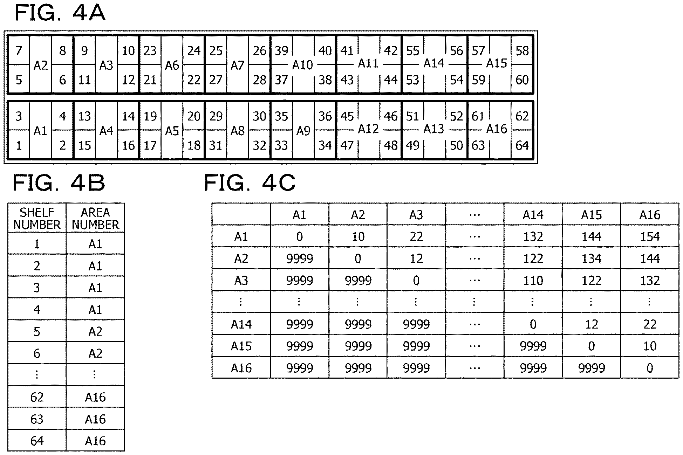

FIG. 4(a) depicts a layout representing a position of each area and a number given to each area in a warehouse and numbers (shelf numbers) given to shelves placed in each area. In the example in FIG. 4(a), areas A1 to A16 are defined, and four shelves are placed in every area.

The condition holding unit 11 holds each condition. FIG. 4(b) is a diagram illustrating a shelf number table held in the condition holding unit 11. As illustrated in FIG. 4(b), in the shelf number table, an area number is associated with a shelf number. In the example in FIG. 4(b), a plurality of shelves is placed in each area. For example, shelves with shelf numbers 1 to 4 are placed in the area A1, and shelves with shelf numbers 5 to 8 are placed in the area A2.

FIG. 4(c) is a diagram illustrating a moving distance table held in the condition holding unit 11. As illustrated in FIG. 4(c), in the moving distance table, the moving distance between every two areas is defined. In the example in FIG. 4(c), the leaving point areas are listed vertically, and the reaching point areas are listed horizontally. The distance between the same areas (for example, between the area A1 and the area A1) is defined as zero. The moving distance from the area A1 to the area A2 is defined as "10". Note that, since the moving directions in the warehouse are defined, there can be an unreachable area without going backward. For example, moving from the area A1 to the area A2 is allowed, but moving from the area A2 to the area A1 is not allowed. Thus, for the moving distance in a case of moving from the area A2 to the area A1, "9999" is held as a sufficiently large value.

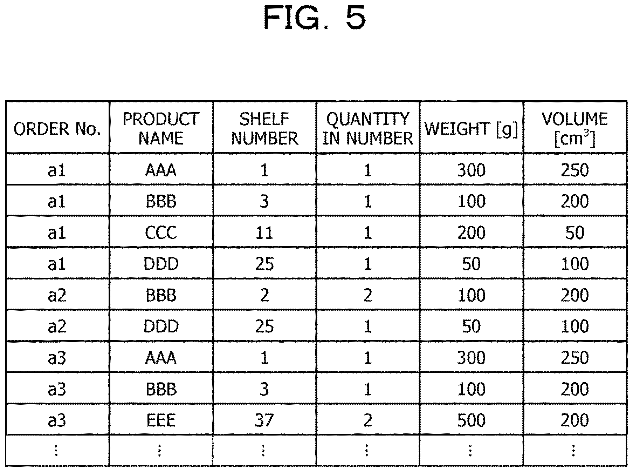

The order holding unit 12 stores all the orders. FIG. 5 is a diagram illustrating an order table held in the order holding unit 12. As illustrated in FIG. 5, each order is associated with the name of an article to be picked, the number given to the shelf on which the article is placed, the quantity in number, the weight per article, the volume per article, and the like. The quantity in number denotes the quantity in number of articles supposed to be picked. Therefore, if the quantity in number of a product BBB has two, two pieces of the product BBB have to be picked. The order table is held in the order holding unit 12 via the input device 104 or the like.

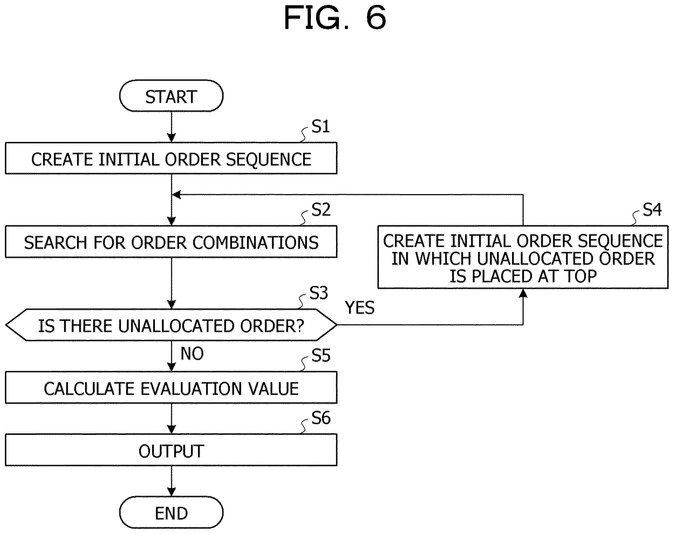

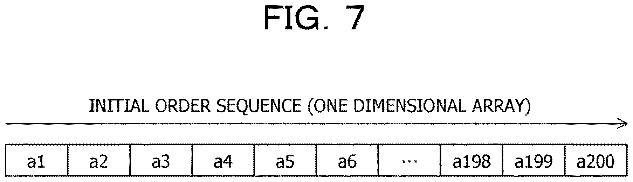

FIG. 6 is a flowchart representing an exemplary operation of the information processing device 100. As illustrated in FIG. 6, the initial order creation unit 14 creates an initial order sequence (step S1). In this case, the initial order creation unit 14 refers to the order table held in the order holding unit 12 and reads all the orders. Next, as illustrated in FIG. 7, the initial order creation unit 14 defines a sequence of all the orders and assigns the defined sequence as the initial order sequence. For example, the initial order creation unit 14 assigns the sequence of the orders held in the order table as the initial order sequence. Alternatively, the initial order creation unit 14 may randomly rearrange each order held in the order table to assign the rearranged orders as the initial order sequence. Alternatively, the initial order creation unit 14 may assign the sequence designated by a user via the input device 104 or the like as the initial order sequence.

Alternatively, the initial order sequence may be formed by picking work efficiency indices as they are calculated with the orders alone, or may be obtained by sorting by values that act favorably on the picking work efficiency indices. For example, in a case where the total moving distance is included in the constraint condition, the orders sorted into an ascending sequence of the moving distances of the orders alone may be used as the initial order sequence. Alternatively, in a case where the article duplication ratio is included in the constraint condition, since the article duplication ratio of the order alone is zero, the orders sorted into an ascending sequence of the number of products, which is the denominator when the number of duplicate articles is calculated, may be assigned as the initial order sequence.

Next, the search unit 15 sequentially searches for one or more combinations of orders so as to satisfy the constraint condition held by the constraint condition holding unit 13 while selecting a candidate in accordance with the initial order sequence (step S2). The constraint condition is a condition for expecting each combined group to satisfy at least one of the linear index and the non-linear index described above. A plurality of constraint conditions may be defined. For example, a constraint condition in which the linear index satisfies a predetermined condition and a constraint condition in which the non-linear index satisfies a predetermined condition may be defined. In addition, the constraint condition may include an upper limit for orders in each group. In the present embodiment, as an example, it is assumed that the constraint condition defines an upper limit of the number of orders in each group and an upper limit of the total moving distance of each group. In this case, the search unit 15 first allocates the first order at the top of the initial order sequence to the first group. Subsequently, the search unit 15 allocates one order at a time to each group successively while selecting a candidate such that each group satisfies the constraint condition. In this manner, the search unit 15 confirms combinations of orders.

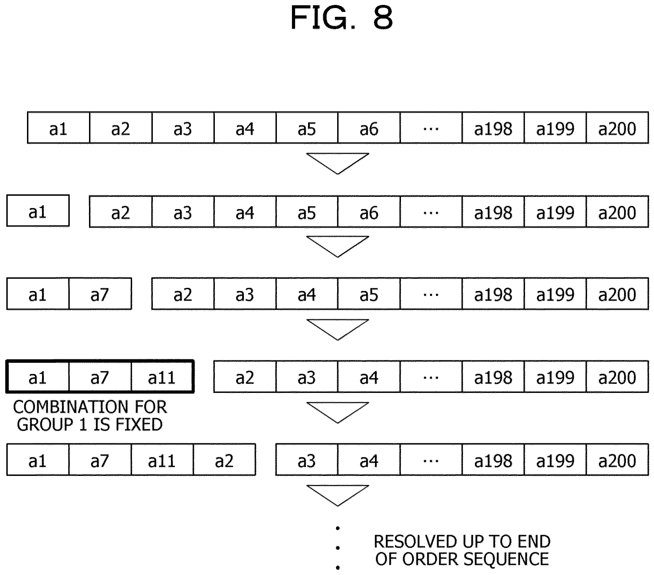

FIG. 8 is a diagram illustrating a search procedure of the search unit 15 in a case where the total moving distance is assigned as an index. The first row (uppermost row) of FIG. 8 illustrates the initial order sequence. When a group to which an order is not allocated is treated as an object as in the second row of FIG. 8, the search unit 15 allocates a remaining order at the top of the initial order sequence. For example, the search unit 15 allocates the order a1 to the first group. Next, as in the third row of FIG. 8, while selecting a candidate from the remaining orders in accordance with the initial sequence, the search unit 15 locates an order having the shortest total moving distance when combined with the order a1, in a round-robin manner one by one. The total moving distance denotes the shortest moving distance in a case where all the articles included in the combined orders are picked in the defined moving directions. In the example in the third row of FIG. 8, the order a7 is combined with the order a1.

Note that the total moving distance in a combination of a plurality of orders can be calculated using the layout in FIG. 4(a), the shelf number table in FIG. 4(b), and the moving distance table in FIG. 4(c).

Next, the search unit 15 searches the orders remaining in the initial order sequence for an order having the shortest total moving distance when combined with the orders a1 and a7, in a round-robin manner one by one. In the example in the fourth row of FIG. 8, the order a11 is combined with the orders a1 and a7. Next, as in the fifth row of FIG. 8, when a group to which an order is not allocated is treated as an object, the search unit 15 allocates the top of orders remaining in the initial order sequence. The search unit 15 then allocates the orders to each group by repeating a similar procedure.

Next, the search unit 15 determines whether or not an order that is unallocated remains (step S3). For example, when each order is successively allocated to one of groups in step S2, in some cases, the constraint condition is not satisfied even by combining in any way, and an unallocated order remains without being allocated to any group. For example, when orders are successively allocated to each group, in the defined moving directions, there is a case where only orders including articles placed in areas having a distance away from each other remain. In this case, "Yes" is determined in step S3.

The unallocated order for the initial order sequence is an order that is likely to become an unallocated order when searching for a combination. Therefore, if the unallocated order is not forcibly allocated to any group, there is a tendency that the unallocated order is likely to become an unallocated order again even if a combination search is performed one more time. Thus, in a case where "Yes" is determined in step S3, the initial order creation unit 14 creates a new initial order sequence by rearranging the unallocated order remaining without being allocated to any group to the top of the initial order sequence (step S4). Thereafter, step S3 is executed one more time using the new initial order sequence created in step S4.

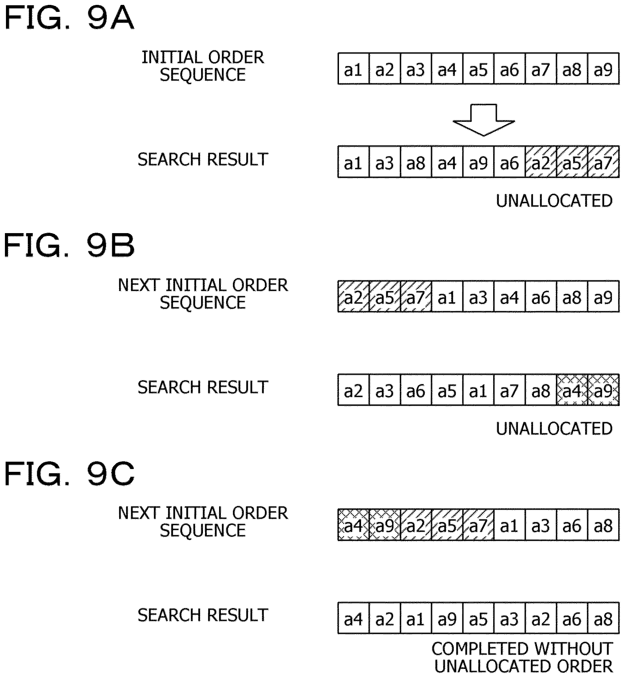

FIGs. 9(a) to 9(c) are diagrams illustrating a procedure of steps S2 to S4. As illustrated in FIG. 9(a), it is assumed that an unallocated order (first unallocated order) remains without being allocated to any group. The first unallocated order can include a plurality of orders. In FIG. 9(a), the orders a2, a5, and a7 remain as the first unallocated orders. As illustrated in FIG. 9(b), the first unallocated orders are placed at the top of the next initial order sequence. This will forcibly allocate the first unallocated orders to any group. In this manner, by forcibly allocating an order that is likely to become an unallocated order to any group, an unallocated order is less likely to occur, and the number of unallocated orders may be reduced.

Note that, even if searches for each combination are made using this initial order sequence, there is a case where an unallocated order (second unallocated order) remains. In this case, as in FIG. 9(c), the first unallocated orders and the second unallocated orders are placed at the top of the next initial order sequence. The sequence of the first unallocated orders and the second unallocated orders is not concerned. When there is no longer an unallocated order as a combination search result, the repetition of steps S2 to S4 ends.

In a case where "No" is determined in step S3, the evaluation unit 16 calculates an evaluation value of an index (the total moving distance, the article duplication ratio, or the like) for the most recently obtained search result (solution) (step S5). Thereafter, the output unit 17 outputs the most recently obtained search result together with the evaluation value calculated in step S5 (step S6). The output result is displayed on the display device 105 or the like. Thereafter, the execution of the flowchart ends.

According to the present embodiment, an unallocated order that is not allocated to any combination is rearranged at the top of the initial order sequence, whereby a new initial order sequence is created. By sequentially searching for combinations so as to satisfy the constraint condition while selecting a candidate in accordance with this new initial order sequence, an order that is likely to be unallocated is forcibly allocated to any combination. This ensures that an unallocated order is less likely to occur and may reduce the number of unallocated orders. In addition, since a search for all combinations is not involved, the time taken for computation may be shortened. The efficiency of the picking work may be improved by putting the upper limit of the total moving distance in the constraint condition.

Note that the second unallocated order is an order that is likely to become an unallocated order in a case where the first unallocated order is placed at the top. Therefore, when the first unallocated order and the second unallocated order are placed, an unallocated order is less likely to occur by placing the second unallocated order on an ahead side of the first unallocated order. In this manner, when placing the unallocated order at the top of the next initial order sequence, it is preferable to place the unallocated order on an ahead side of the immediately preceding initial order sequence.

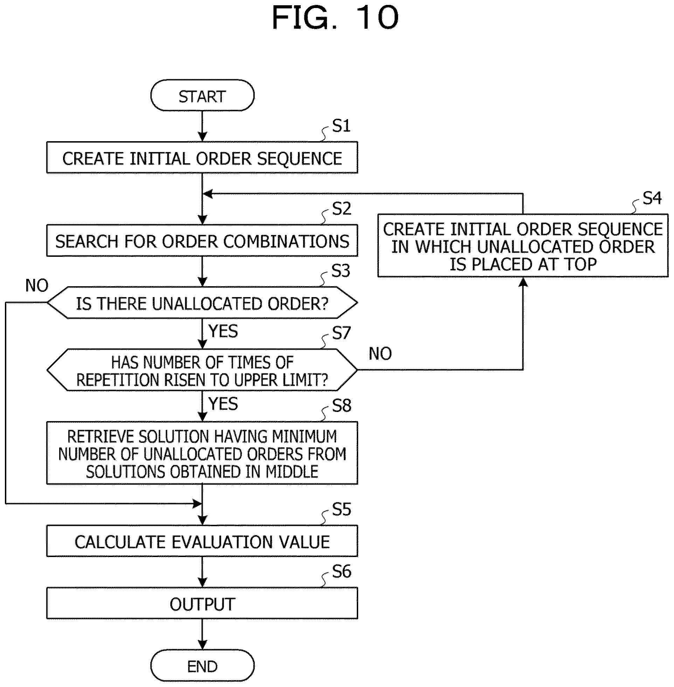

Note that an upper limit may be set for the number of repetitions of steps S2 to S4. FIG. 10 is a flowchart representing an exemplary operation in a case where an upper limit is set for the number of repetitions of steps S2 to S4. In steps S1 to S4 in FIG. 10, it is assumed that processes similar to the processes in steps S1 to S4 in FIG. 9 are performed. In a case where "Yes" is determined in step S3, the search unit 15 determines whether or not the number of repetitions of steps S2 to S4 has risen to the upper limit (step S7). In a case where "No" is determined in step S7, step S4 is executed. In a case where "Yes" is determined in step S7, the search unit 15 retrieves a search result (solution) having the minimum number of unallocated orders from the solutions obtained in the middle (step S8). Thereafter, the execution of the flowchart ends.

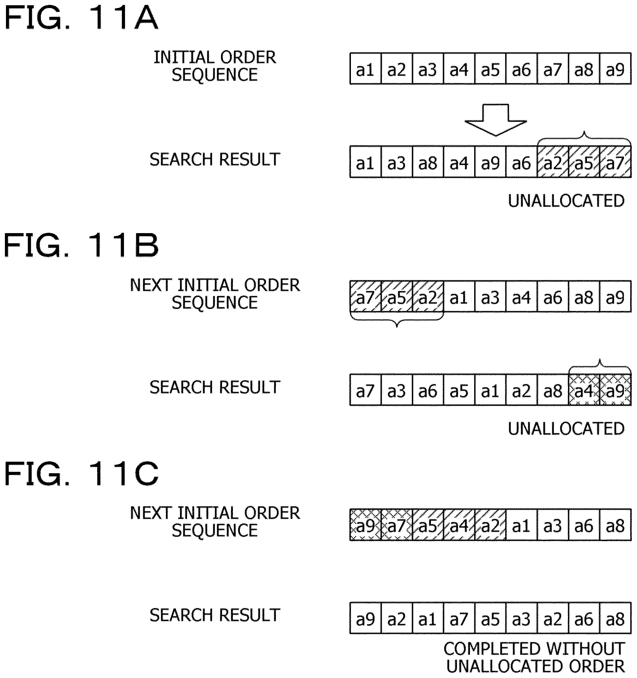

Note that, since a search is made successively from the order closest to the top in the initial order sequence, there is a tendency that an order positioned more behind is likely to be unallocated. Accordingly, it is preferable that the orders that are unallocated are rearranged into a reverse sequence to the initial sequence of the orders and placed at the top of the next initial orders. In this case, it is possible to increase the probability of forcibly allocating an order that is likely to be unallocated to any group. This may enable to reduce the number of unallocated orders. For example, as illustrated in FIG. 11(a), it is assumed that the orders a2, a5, and a7 have become unallocated orders. In this case, as illustrated in FIG. 11(b), when these orders are placed at the top of the next initial order sequence, the orders a7, a5, and a2 are rearranged in this sequence. In a case where the orders a4 and a9 are unallocated as a result of the search in this initial order sequence, it is preferable to rearrange the orders a9, a7, a5, a4, and a2 in this sequence and place the orders a9, a7, a5, a4, and a2 at the top in the next initial order sequence as illustrated in FIG. 11(c).

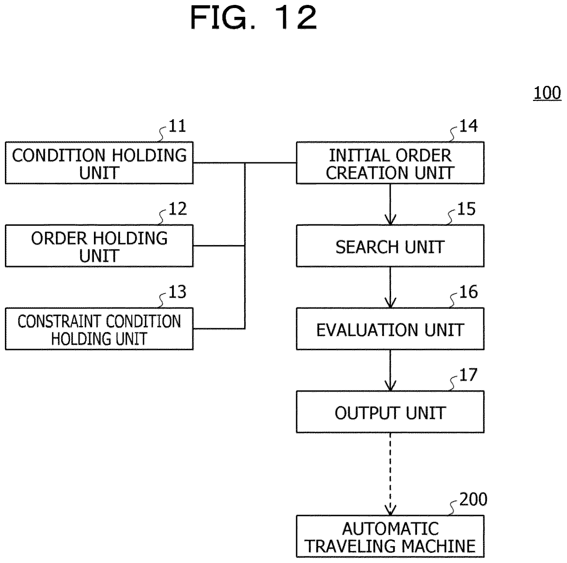

In addition, the result output by the output unit 17 may be output to an automatic traveling machine that automatically goes around in the warehouse. FIG. 12 is a block diagram illustrating this case. As illustrated in FIG. 12, the result output by the output unit 17 is output to an automatic traveling machine 200. The automatic traveling machine 200 may automatically perform multi-picking in accordance with the combination of the orders received from the output unit 17.

In each of the above examples, the order is an example of a designation unit that designates work contents. The initial order sequence is an example of an initial sequence of a plurality of designation units each of which designates work contents. The search unit 15 is an example of a search unit that performs a first search of sequentially searching for one or more of the combinations of the designation units so as to satisfy the constraint condition in accordance with the first sequence. The initial order creation unit 14 is an example of a creation unit that creates a second sequence by placing, at a top in the first sequence, first unallocated designation units that are the designation units not allocated to any of the combinations as a result of the first search.

While the embodiments of the present invention have been described above in detail, the present invention is not limited to such specific embodiments, and various modifications and alterations can be made within the scope of the present invention disclosed in the claims.

### CITATION LIST

### PATENT DOCUMENT

Patent Document 1: Japanese Laid-open Patent Publication No. 2020-57252
Patent Document 2: International Publication Pamphlet No. WO 2016/117111

### REFERENCE SIGNS LIST

- 11: Condition holding unit
- 12: Order holding unit
- 13: Constraint condition holding unit
- 14: Initial order creation unit
- 15: Search unit
- 16: Evaluation unit
- 17: Output unit
- 100: Information processing device
- 101: CPU
- 102: RAM
- 103: Storage device
- 104: Input device
- 105: Display device

## Claims

1. A planning program for causing a computer to execute processing comprising:
acquiring a first sequence that indicates an arrangement sequence of a plurality of designation units each of which designates work contents;
acquiring a constraint condition regarding combinations of the plurality of designation units;
performing first search processing of sequentially searching for one or more of the combinations of the designation units so as to satisfy the constraint condition in accordance with the first sequence;
performing first creation processing of creating a second sequence by placing, at a top in the first sequence, first unallocated designation units that are the designation units not allocated to any of the combinations as a result of the first search processing; and
performing second search processing of sequentially searching for one or more of the combinations of the designation units so as to satisfy the constraint condition in accordance with the second sequence.

2. The planning program according to claim 1, the processing further comprising:
performing second creation processing of creating a third sequence by rearranging second unallocated designation units that are the designation units not allocated to any of the combinations as a result of the second search processing, and the first unallocated designation units, to the top in the second sequence; and
performing third search processing of sequentially searching for one or more of the combinations of the designation units so as to satisfy the constraint condition in accordance with the third sequence.

3. The planning program according to claim 2, wherein in the second creation processing, the second unallocated designation units are placed on an ahead side of the first unallocated designation units.

4. The planning program according to any one of claims 1 to 3, wherein the first creation processing includes
in a case where the first unallocated designation units include two or more of the designation units, rearranging a succession of the first unallocated designation units in reverse order to a sequence in the first sequence.

5. The planning program according to any one of claims 1 to 4, for causing the computer to execute a process of repeating: the process of sequentially searching for one or more of the combinations of the designation units so as to satisfy the constraint condition in accordance with a sequence of the plurality of designation units; and the process of creating a new sequence by rearranging, to the top in the sequence, unallocated designation units that are the designation units not allocated to any of the combinations and sequentially searching for one or more of the combinations of the designation units so as to satisfy the constraint condition, wherein
an upper limit is set for a number of times of the repeating.

6. The planning program according to any one of claims 1 to 5, wherein the constraint condition is a condition under which an index of each of the designation units has a possibility of being different by depending on another of the designation units to be combined.

7. The planning program according to any one of claims 1 to 6, wherein the work contents are picking works at a place where a plurality of articles is placed in a distributed manner,
picking of one or more of the articles is designated in the designation units, and
the constraint condition is a condition regarding a total moving distance until the picking is completed.

8. The planning program according to any one of claims 1 to 7, wherein the first sequence is obtained by rearranging the plurality of designation units, based on an index included in the constraint condition.

9. A planning method implemented by a computer, the planning method comprising:
acquiring a first sequence that indicates an arrangement sequence of a plurality of designation units each of which designates work contents;
acquiring a constraint condition regarding combinations of the plurality of designation units;
performing first search processing of sequentially searching for one or more of the combinations of the designation units so as to satisfy the constraint condition in accordance with the first sequence;
performing first creation processing of creating a second sequence by placing, at a top in the first sequence, first unallocated designation units that are the designation units not allocated to any of the combinations as a result of the first search processing; and
performing second search processing of sequentially searching for one or more of the combinations of the designation units so as to satisfy the constraint condition in accordance with the second sequence.

10. The planning method according to claim 9, the processing further comprising:
performing second creation processing of creating a third sequence by rearranging second unallocated designation units that are the designation units not allocated to any of the combinations as a result of the second search processing, and the first unallocated designation units, to the top in the second sequence; and
performing third search processing of sequentially searching for one or more of the combinations of the designation units so as to satisfy the constraint condition in accordance with the third sequence.

11. The planning method according to claim 10, wherein in the second creation processing, the second unallocated designation units are placed on an ahead side of the first unallocated designation units.

12. The planning method according to any one of claims 9 to 11, wherein the first creation processing includes
in a case where the first unallocated designation units include two or more of the designation units, rearranging a succession of the first unallocated designation units in reverse order to a sequence in the first sequence.

13. The planning method according to any one of claims 9 to 12, for causing the computer to execute a process of repeating: the process of sequentially searching for one or more of the combinations of the designation units so as to satisfy the constraint condition in accordance with a sequence of the plurality of designation units; and the process of creating a new sequence by rearranging, to the top in the sequence, unallocated designation units that are the designation units not allocated to any of the combinations and sequentially searching for one or more of the combinations of the designation units so as to satisfy the constraint condition, wherein
an upper limit is set for a number of times of the repeating.

14. The planning method according to any one of claims 9 to 13, wherein the constraint condition is a condition under which an index of each of the designation units has a possibility of being different by depending on another of the designation units to be combined.

15. The planning method according to any one of claims 9 to 14, wherein the work contents are picking works at a place where a plurality of articles is placed in a distributed manner,
picking of one or more of the articles is designated in the designation units, and
the constraint condition is a condition regarding a total moving distance until the picking is completed.

16. The planning method according to any one of claims 9 to 15, wherein the first sequence is obtained by rearranging the plurality of designation units, based on an index included in the constraint condition.

17. An information processing apparatus comprising:
a search unit configured to perform processing including:
acquiring a first sequence that indicates an arrangement sequence of a plurality of designation units each of which designates work contents,
acquiring a constraint condition regarding combinations of the plurality of designation units, and
performing a first search processing that includes sequentially searching for one or more of the combinations of the designation units so as to satisfy the constraint condition in accordance with the first sequence; and
a creation unit configured to perform processing including:
performing a first creation process of creating a second sequence by placing, at a top in the first sequence, first unallocated designation units that are the designation units not allocated to any of the combinations as a result of the first search process; and
performing a second search process of sequentially searching for one or more of the combinations of the designation units so as to satisfy the constraint condition in accordance with the second sequence.

18. The information processing apparatus according to claim 17, wherein
the creation unit is configured to create a third sequence by rearranging second unallocated designation units that are the designation units not allocated to any of the combinations as a result of the second search processing, and the first unallocated designation units, to the top in the second sequence; and
the search unit is configured to perform third search of sequentially searching for one or more of the combinations of the designation units so as to satisfy the constraint condition in accordance with the third sequence.

19. The information processing apparatus according to claim 18, wherein in the second creation processing, the creation unit places the second unallocated designation units on an ahead side of the first unallocated designation units.

20. The information processing apparatus according to any one of claims 17 to 19, wherein in a case where the first unallocated designation units include two or more of the designation units, the creation unit rearranges, in the first creation processing, a succession of the first unallocated designation units in reverse order to a sequence in the first sequence.

21. The information processing apparatus according to any one of claims 17 to 19, wherein the search unit and the creation unit are configured to repeat: sequentially searching for one or more of the combinations of the designation units so as to satisfy the constraint condition in accordance with a sequence of the plurality of designation units; and creating a new sequence by rearranging, to the top in the sequence, unallocated designation units that are the designation units not allocated to any of the combinations and sequentially searching for one or more of the combinations of the designation units so as to satisfy the constraint condition, wherein
an upper limit is set for a number of times of the repeating.

22. The information processing apparatus according to any one of claims 17 to 21, wherein the constraint condition is a condition under which an index of each of the designation units has a possibility of being different by depending on another of the designation units to be combined.

23. The information processing apparatus according to any one of claims 17 to 22, wherein the work contents are picking works at a place where a plurality of articles is placed in a distributed manner,
picking of one or more of the articles is designated in the designation units, and
the constraint condition is a condition regarding a total moving distance until the picking is completed.

24. The information processing apparatus according to any one of claims 17 to 23, wherein the first sequence is obtained by rearranging the plurality of designation units, based on an index included in the constraint condition.
